(19) Europäisches Patentamt
European Patent Office
Office européen des brevets

(11) **EP 2 168 337 B1**

(12) **FASCICULE DE BREVET EUROPEEN**

(45) Date de publication et mention
de la délivrance du brevet:
**09.04.2014 Bulletin 2014/15**

(21) Numéro de dépôt: **08786227.2**

(22) Date de dépôt: **17.07.2008**

(51) Int Cl.:
***H04L 27/00*** *(2006.01)*

(86) Numéro de dépôt international:
**PCT/EP2008/059397**

(87) Numéro de publication internationale:
**WO 2009/010564 (22.01.2009 Gazette 2009/04)**

(54) **MÉTHODE DE DÉTECTION DE SIGNAUX CYCLOSTATIONNAIRES**

VERFAHREN ZUR ERKENNUNG ZYKLOSTATIONÄRER SIGNALE

METHOD OF DETECTING CYCLOSTATIONARY SIGNALS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **17.07.2007 FR 0756530**

(43) Date de publication de la demande:
**31.03.2010 Bulletin 2010/13**

(73) Titulaire: **Commissariat à l'Énergie Atomique et aux Énergies Alternatives**
**75015 Paris (FR)**

(72) Inventeur: **JALLON, Pierre**
**F-38100 Grenoble (FR)**

(74) Mandataire: **Ilgart, Jean-Christophe et al**
**BREVALEX**
**95 rue d'Amsterdam**
**75378 Paris Cedex 8 (FR)**

(56) Documents cités:
• **JALLON, CHEVREUIL: "Second-order based cyclic frequency estimates: the case of digital communication signals" IEEE INTERNATIONAL CONFERENCE ON ACOUSTICS, SPEECH, AND SIGNAL PROCESSING, 14 mai 2006 (2006-05-14), pages IV-389-IV-392, XP002475923 New York, US**
• **ONER ET AL.: "Air interface recognition for a software radio system exploiting cyclostationarity" IEEE INTERNATIONAL SYMPOSIUM ON PERSONAL, INDOOR AND MOBILE RADIO COMMUNICATIONS, vol. 3, 5 septembre 2004 (2004-09-05), pages 1947-1951, XP010754185 Piscataway, US**
• **MITOLA: "Cognitive Radio" KUNGLIGA TEKNISKA HÖGSKOLAN DISSERTATION, 8 mai 2000 (2000-05-08), XP002475924 Stockholm, SE cité dans la demande**
• **GARDNER, SPOONER: "Cyclic spectral analysis for signal detection and modulation recognition" IEEE MILITARY COMMUNICATIONS CONFERENCE, 23 octobre 1988 (1988-10-23), pages 419-424, XP010071974 New York, US**
• **HALFORD, BRANDT-PEARCE: "New-User Identification in a CDMA System" IEEE TRANSACTIONS ON COMMUNICATIONS, vol. 46, no. 1, janvier 1998 (1998-01), pages 144-155, XP011009098 Piscataway, US**

**Description**

**DOMAINE TECHNIQUE**

La présente invention concerne la détection de signaux cyclostationnaires. Elle trouve application dans les domaines aussi variés que celui des systèmes radio opportunistes, celui du traitement d'antennes ou du tatouage radio.

**ÉTAT DE LA TECHNIQUE ANTÉRIEURE**

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB (*Ultra Wide Band*). La seconde consiste à utiliser de manière opportuniste une partie du spectre ponctuellement ou temporairement inoccupée, c'est la voie dite de radio opportuniste (ou *Cognitive Radio*). On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Avant de pouvoir émettre dans une bande donnée, il est nécessaire qu'un émetteur puisse déterminer si un signal radio, notamment un signal TDMA (*Time Division Multiple Access*) comme un signal GSM, ou un signal étalé spectralement de type CDMA (*Code Division Multiple Access)* ou encore un signal OFDM (*Orthogonal Frequency Division Multiplexing*) est présent dans cette bande. Etant donné que le signal étalé peut être noyé dans le bruit, un simple détecteur de puissance ne permet pas d'obtenir cette information de manière fiable.

De manière générale, on distingue les méthodes de détection à l'aveugle pour lesquelles on ne dispose d'aucune information *a priori* sur le signal dont on veut détecter la présence et les méthodes d'estimation de type semi-aveugle pour lesquelles on connaît certains paramètres du signal à détecter.

Une méthode de détection semi-aveugle de la présence d'un signal TDMA, CDMA ou OFDM à partir d'un critère de cyclostationnarité a été décrite dans les articles de M. Öner et al. intitulés: << Air interface recognition for a software radio system exploiting cyclostationarity>> publié dans Proc. of 15th IEEE International Symposium on Personal, Indoor and Mobile Radio Communications, Sept. 2004, pp. 1947-1951; <<Cyclostationarity based air interface recognition for software radiosystems>> publié dans Radio and Wireless Conference, 2004 IEEE, Sept. 2004, pp. 263-266. Plus précisément, ces méthodes permettent de tester à partir de la fonction d'autocorrélation du signal reçu si ce dernier présente une fréquence cyclique caractéristique d'une interface radio prédéterminée.

Ces méthodes ne fonctionnent cependant pas dans un contexte aveugle. En outre, même dans un contexte semi-aveugle, lorsque le signal à détecter peut prendre différentes valeurs de paramètres de transmission, par exemple un signal CDMA pouvant avoir différents facteurs d'étalement spectral, cette méthode ne permet pas d'obtenir un taux de fausse alarme ou CFAR (*Constant False Alarm Rate*) prédéterminé.

La détection de signaux cyclostationnaires est utilisée dans des domaines très variés, par exemple celui du tatouage radio. Le tatouage est un signal de très faible puissance que l'on insère dans un signal audio pour y introduire des données cachées, aux fins notamment de traquer les copies illicites. L'article de L. de C.T. Gomes et al. intitulé « Tatouage audio exploitant des propriétés de cyclostationnarité » publié dans la revue Traitement du Signal, 2001, Vo. 19, N° 1, pp. 1-9, propose un signal de tatouage cyclostationnaire codant des données cachées à l'aide d'une pluralité de fréquences cycliques. La détection publique du tatouage audio est réalisée au moyen d'une détection desdites fréquences cycliques dans le signal audio. Toutefois, cette méthode de détection ne permet pas de déterminer, pour une grande variété de signaux audio, si un tatouage radio est présent avec un taux de fausse alarme prédéterminée.

Le but de la présente invention est de proposer une méthode robuste permettant de déterminer avec un degré de fiabilité prédéterminé, dans un contexte aveugle ou semi-aveugle, si un signal cyclostationnaire est présent dans un signal reçu ou lu, ce pour des conditions de faible rapport signal à bruit.

**EXPOSÉ DE L'INVENTION**

La présente invention est définie, selon un premier mode de réalisation, par une méthode de détection d'un signal cyclostationnaire dans un signal à analyser, reçu d'un émetteur par un récepteur ou lu d'un support d'enregistrement par un dispositif de lecture, dans laquelle on estime la valeur d'une fonction de discrimination *J* s'exprimant comme une forme quadratique des coefficients de corrélation cyclique du signal à analyser pour un ensemble de décalages temporels non nuls et un ensemble de fréquences cycliques, puis l'on compare la valeur $1-\gamma\left(\nu, \frac{U}{\sigma^4}J\right)$ à un taux de mauvaise détection η pour déterminer si ledit signal cyclostationnaire est présent dans le signal à analyser, où $\gamma(\nu,x)$ est la fonction gamma inférieure incomplète normalisée, $\nu$ est le produit du cardinal dudit ensemble de décalages temporels non nuls et du cardinal dudit ensemble de fréquences cycliques, $U$ est la largeur de la fenêtre d'autocorrélation sur laquelle sont calculés les coefficients de corrélation cyclique, et $\sigma^4$ est le carré de la variance du bruit.

Selon une variante, ledit ensemble de fréquences cycliques se réduit à la fréquence nulle et la valeur de la fonction de discrimination est calculée par :

$$J = \sum_{m \in I_M^*} \left| R_s^0(m) \right|^2$$

où $R_s^0(m)$ est la valeur de la fonction d'autocorrélation du signal à analyser pour un décalage temporel non nul $m \in I_M^*$, et $I_M^*$ étant ledit ensemble de décalages temporels non nuls. Avantageusement, la valeur de la fonction d'autocorrélation pourra être estimée à partir des échantillons $s(u)$ du signal à analyser par :

$$\hat{R}_s^0(m) = \frac{1}{U} \sum_{u=0}^{U-1} s(u+m)s^*(u)$$

où $U$ est la largeur de la fenêtre d'autocorrélation et $m$ est un décalage temporel exprimé en nombre de périodes d'échantillonnage.

Selon une seconde variante, la fonction de discrimination est calculée par :

$$J = \left\| \tilde{\mathbf{A}}^{-\frac{1}{2}} \mathbf{R} \right\|^2$$

où $\mathbf{R}$ est le vecteur de taille $\nu$ constitué des coefficients de corrélation cyclique $R_s^{\alpha_k}(m)$ pour lesdits décalages temporels non nuls et lesdites fréquences cycliques, et $\tilde{\mathbf{A}}$ est une matrice proportionnelle à la matrice de corrélation de ces coefficients.

Selon une troisième variante, la fonction de discrimination pourra être calculée par :

$$J = \sum_{m \in I_M^*} \sum_{\alpha_k \in I_K} \left| R_s^{\alpha_k}(m) \right|^2$$

où $R_s^{\alpha_k}(m)$, $m \in I_M^*$ sont les coefficients de corrélation cyclique, $I_M^*$ est ledit ensemble de décalages temporels non nuls et $I_K$ est ledit ensemble de fréquences cycliques. Avantageusement, les coefficients de corrélation cyclique pourront être estimés à partir des échantillons $s(u)$ du signal à analyser par :

$$\hat{R}_s^{\alpha_k}(m) = \frac{1}{U} \sum_{u=0}^{U-1} s(u+m)s^*(u)e^{2i\pi\alpha_k u}$$

où $\alpha_k$ est une fréquence cyclique appartenant à $I_K$ et $m$. est un décalage temporel, exprimé en nombre de périodes d'échantillonnage.

L'invention est également définie, selon un second mode de réalisation, par une méthode de détection d'un signal cyclostationnaire dans une pluralité $Q$ de signaux à analyser, reçus d'un émetteur par une pluralité de récepteurs ou lus d'un support d'enregistrement par une pluralité de dispositifs de lecture, dans laquelle, pour chacun desdits signaux à analyser, on estime la valeur d'une fonction de discrimination $J_q$ s'exprimant comme une forme quadratique des coefficients de corrélation cyclique de ce signal pour un ensemble de décalages temporels non nuls et un ensemble de fréquences cycliques, et l'on compare la valeur $1 - \gamma \left( \sum\limits_{q=1}^{Q} \nu_q, \sum\limits_{q=1}^{Q} \dfrac{U_q}{\sigma_q^4} J_q \right)$ à un taux de mauvaise détection $\eta$ pour déterminer si ledit signal cyclostationnaire est présent dans lesdits signaux à analyser, où $\gamma(\nu, x)$ est la fonction gamma inférieure incomplète normalisée, $\nu_q$ est le produit du cardinal dudit ensemble de décalages temporels non nuls et du cardinal dudit ensemble de fréquences cycliques pour le signal à analyser $s_q(t)$, $U_q$ est la largeur de la fenêtre d'autocorrélation sur laquelle sont calculés les coefficients de corrélation cyclique et $\sigma_q^4$ est le carré de la variance du bruit, relatifs au signal à analyser.

Selon une première variante, pour chacun desdits signaux à analyser, ledit ensemble de fréquences cycliques se réduit à la fréquence nulle et la valeur de la fonction de discrimination est calculée, pour ce signal, par :

$$J_q = \sum_{m \in I_{M_q}^*} \left| R_{s_q}^0(m) \right|^2$$

où $R_{s_q}^0(m)$ est la valeur de la fonction d'autocorrélation du signal à analyser $s_q(t)$, pour un décalage temporel non nul $m \in I_{M_q}^*$, $I_{M_q}^*$ étant ledit ensemble de décalages temporels non nuls pour ce signal. Avantageusement, pour chacun desdits signaux à analyser, ladite valeur de la fonction d'autocorrélation pourra être estimée à partir des échantillons $s(u)$ de ce signal par :

$$\hat{R}_{s_q}^0(m) = \frac{1}{U} \sum_{u=0}^{U-1} s_q(u+m) s_q^*(u)$$

où $U$ est la largeur de la fenêtre d'autocorrélation et $m$ est un décalage temporel exprimé en nombre de périodes d'échantillonnage.

Selon une seconde variante, pour chaque signal $s_q(t)$ à analyser, la fonction de discrimination est calculée par :

$$J_q = \left\| \tilde{\mathbf{A}}_q^{-\frac{1}{2}} \mathbf{R}_q \right\|^2$$

où $\mathbf{R}_q$ est le vecteur de taille $\nu_q$ constitué des coefficients de corrélation cyclique $R_{s_q}^{\alpha_k}(m)$ pour lesdits décalages temporels non nuls et lesdites fréquences cycliques, et $\mathbf{A}_q$ est une matrice proportionnelle à la matrice de corrélation de ces coefficients.

Selon une troisième variante, pour chaque signal $s_q(t)$ à analyser, la fonction de discrimination est calculée par :

4

$$J_q = \sum_{m \in I_{M_q}^*} \sum_{\alpha_k \in I_{K_q}} \left| R_{s_q}^{\alpha_k}(m) \right|^2$$

où $R_{s_q}^{\alpha_k}(m)$, $m \in I_{M_q}^*$ sont les coefficients de corrélation cyclique du signal $s_q(t)$, $I_{M_q}^*$ est ledit ensemble de décalages temporels non nuls et $I_{K_q}$ est ledit ensemble de fréquences cycliques relatifs à ce signal. Avantageusement, pour chaque signal $s_q(t)$ à analyser, les coefficients de corrélation cyclique pourront être estimés à partir des échantillons $s_q(u)$ de ce signal par :

$$\hat{R}_s^{\alpha_k}(m) = \frac{1}{U} \sum_{u=0}^{U-1} s(u+m) s^*(u) e^{2i\pi\alpha_k u}$$

où $\alpha_k$ est une fréquence cyclique appartenant à $I_K$ et $m$ est un décalage temporel, exprimé en nombre de périodes d'échantillonnage.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente un organigramme de la méthode de détection d'un signal cyclostationnaire, selon un premier mode de réalisation de l'invention ;
La Fig. 2 représente un organigramme de la méthode de détection d'un signal cyclostationnaire, selon un second mode de réalisation de l'invention ;
La Fig. 3 représente un organigramme de la méthode de détection d'un signal cyclostationnaire, selon un troisième mode de réalisation de l'invention ;
La Fig. 4 représente un organigramme de la méthode de détection d'un signal cyclostationnaire, selon un quatrième mode de réalisation de l'invention.

## EXPOSÉ DÉTAILLÉ DE MODES DE RÉALISATION PARTICULIERS

Nous considèrerons dans la suite le cas d'un signal cyclostationnaire noyé dans du bruit. Nous désignerons ici par signal cyclostationnaire (au sens large) un signal susceptible d'être représenté par une fonction aléatoire $s(t)$ telle que sa fonction d'autocorrélation définie par :

$$R_s(t,\tau) = E\left\{ s(t) s^*(t-\tau) \right\} \tag{1}$$

où $E\{.\}$ désigne l'espérance mathématique et est une fonction périodique. Dans ce cas, la fonction d'autocorrélation peut être développée en série de Fourier :

$$R_s(t,\tau) = \sum_k R_s^{\tilde{\alpha}_k}(\tau) e^{2i\pi\tilde{\alpha}_k t} \tag{2}$$

où les coefficients complexes $R_s^{\tilde{\alpha}_k}(\tau)$ sont appelés coefficients de corrélation cyclique et les valeurs réelles $\tilde{\alpha}_k$ sont appelées fréquences cycliques du signal.

Si l'on se place dans le cas d'un signal cyclostationnaire à temps discret, l'expression (2) devient :

$$R_s(n,m) = \sum_k R_s^{\alpha_k}(m) e^{2i\pi\alpha_k n} \qquad (3)$$

où $t=nT_e$, $\tau=mT_e$ et $\widetilde{\alpha}_k = \dfrac{\alpha_k}{T_c}$ où $T_e$ est la période d'échantillonnage. Dans la suite, nous nous référerons indifféremment à l'une ou l'autre formulation sans perte de généralité.

Nous considérons dans la suite un signal à analyser, reçu d'un émetteur par un ou plusieurs récepteurs, ou bien un signal lu d'un support d'enregistrement, par un ou plusieurs dispositifs de lecture.

La méthode de détection selon l'invention permet de déterminer avec un degré de fiabilité donné, c'est-à-dire, de manière équivalente, avec un taux de mauvaise détection donnée, si un signal cyclostationnaire est présent dans le signal à analyser.

Nous supposerons dans la suite que le signal cyclostationnaire est noyé dans un bruit blanc gaussien centré, avec un rapport signal à bruit très faible, autrement dit très négatif lorsqu'il est exprimé en dB.

Nous noterons conventionnellement $H_0$ l'hypothèse selon laquelle le signal à analyser ne contient que du bruit et $H_1$ l'hypothèse selon laquelle le signal à analyser contient un signal cyclostationnaire noyé dans ce bruit.

La méthode de détection selon l'invention utilise de manière avantageuse une fonction de discrimination définie comme une forme quadratique des coefficients de corrélations cycliques du signal à analyser, les coefficients étant relatifs à une pluralité de décalage temporels non nuls et une pluralité de fréquences cycliques.

La fonction de discrimination pourra prendre la forme :

$$J = \sum_{m \in I_M^*} \sum_{\alpha_k \in I_K} \left| R_s^{\alpha_k}(m) \right|^2 \qquad (4)$$

où $I_M^*$ est un ensemble discret de valeurs non nulles de décalage temporel de la fonction d'autocorrélation et $I_K$ est un ensemble discret de valeurs de fréquences cycliques. Le cas échéant, l'ensemble $I_M^*$ et/ou l'ensemble $I_K$ peu(ven)t être réduit(s) à un singleton.

On notera $M = card\left(I_M^*\right)$ et $K = card\,(I_K)$.

En théorie, lorsque le signal à analyser ne présente pas de cyclostationnarité, c'est-à-dire lorsque l'on se trouve dans l'hypothèse $H_0$, la valeur de $J$ est nulle.

En pratique, on estime $J$ en estimant les coefficients de corrélation cyclique dans le domaine temporel de la manière suivante

$$\hat{R}_s^{\alpha_k}(m) = \frac{1}{U} \sum_{u=0}^{U-1} s(u+m)s^*(u) e^{2i\pi\alpha_k u} \qquad (5)$$

où $U$ est le temps d'observation, aussi appelé largeur de fenêtre d'autocorrélation. L'estimée $\hat{J}$ de $J$ étant alors obtenue simplement par :

$$\hat{J} = \sum_{m \in I_M^*} \sum_{\alpha_k \in I_K} \left| \hat{R}_s^{\alpha_k}(m) \right|^2 \qquad (6)$$

Lorsque l'estimée $\hat{J}$ est supérieure à un seuil prédéterminé $J_0$, on pourra en conclure qu'un signal cyclostationnaire est présent dans le signal à analyser. En revanche, lorsque l'estimée $\hat{J}$ est inférieure à ce seuil, on pourra en conclure que le signal à analyser ne contient que du bruit.

Nous donnerons ci-après quelques exemples non limitatifs de fonction de discrimination lorsque le signal cyclostationnaire est un signal étalé spectralement ou un signal OFDM.

En général, un signal étalé spectralement, reçu d'un émetteur par un récepteur peut s'exprimer de la manière suivante :

$$s(t) = \sum_p a_p \sum_{\ell=0}^{L-1} c_\ell g(t - \ell T_c - pT_s) + b(t) \qquad (7)$$

où $c_\ell$, $\ell = 0,..,L\text{-}1$ est la séquence d'étalement spectral, $T_c$ est la période bribe (*chip*), $T_s=LT_c$ est la période symbole, $a_p$ sont les symboles d'information transmis par l'émetteur, $g(t)$ est la convolution de l'impulsion de mise en forme d'un symbole par la réponse impulsionnelle du canal entre l'émetteur et le récepteur, $b(t)$ est une fonction aléatoire décrivant le bruit.

De manière similaire, un signal OFDM peut s'écrire, après démodulation en bande de base dans le récepteur, sous la forme suivante :

$$s(t) = \frac{\sqrt{E}}{N} \sum_k g(t - k(N+D)T_c) e^{2i\pi\Delta ft} \cdot \sum_{n=0}^{N-1} a_{n+kN} e^{2i\pi \frac{n}{NT_c}(t - DT_c - k(N+D)T_c)}$$

$$(8)$$

où $E$ est la puissance du signal, $N$ est le nombre de porteuses du multiplex OFDM, $a_n$ sont les symboles d'information appartenant à un alphabet de modulation, typiquement BPSK, QPSK ou QAM, $1/T_c$ est le débit des symboles d'information, l'intervalle inter-porteuse valant $1/NT_c$, $D$ est la taille du préfixe cyclique exprimée en fraction de la durée utile $T_u = NT_c$, $g(t)$ est une impulsion de mise en forme des symboles OFDM ayant un support temporel $[0,(N+D)T_c]$ destiné à apodiser le spectre du signal, $\Delta f$ est un résidu de porteuse dû à l'imperfection de la démodulation RF.

Lorsque la méthode de détection selon l'invention opère dans un contexte aveugle, c'est-à-dire lorsque l'on ne dispose d'aucune information *a priori* sur le signal cyclostationnaire qui pourrait se trouver noyé dans le bruit, on se contente alors de calculer la fonction de discrimination pour la fréquence cyclique nulle. Autrement dit, l'ensemble des fréquences cycliques se réduit à un singleton, $I_K=\{0\}$.

Pour détecter à l'aveugle la présence d'un signal étalé spectralement noyé dans du bruit, on pourra prendre comme ensemble de valeurs de décalage temporel, l'ensemble défini par :

$$I_M = \{-M_{max},...,-M_{min},\} \cup \{M_{min},...,M_{max}\}$$

où $M_{min}$ et $M_{max}$ sont des entiers positifs non nuls. Typiquement, $M_{min}=1$ et $M_{max} = 10$ .

Pour détecter à l'aveugle un signal OFDM noyé dans du bruit, on prendra comme ensemble de valeurs de décalage temporel, le singleton :

$$I_M = \left\{ \frac{T_u}{T_e} \right\}$$

où $T_u$ est la durée utile, et $T_e$ est la période d'échantillonnage.

Dans un contexte semi-aveugle on échantillonnera le signal à analyser, CDMA ou OFDM à sa fréquence chip, soit $\frac{1}{T_c}$ .

Pour un signal CDMA dont on connaît le facteur d'étalement spectral $L$, on pourra prendre respectivement comme ensemble de fréquences cycliques et ensemble de décalages temporels :

$$I_K = \left\{0, \frac{1}{L}, ..., \frac{L-1}{L}\right\} \quad \text{et} \quad I_M = \left\{-M_{\max}, ..., -M_{\min}, \right\} \cup \left\{M_{\min}, ..., M_{\max}\right\}$$

De manière similaire, dans le cas de la détection d'un signal OFDM, on pourra prendre respectivement comme ensemble de fréquences cycliques et ensemble de décalages temporels :

$$I_M = \left\{\frac{T_u}{T_e}\right\} \quad \text{et} \quad I_K = \left\{-\frac{N}{D}+1, ..., \frac{N}{D}-1\right\}$$

Revenant au cas général, la méthode de détection selon l'invention permet avantageusement de décider entre les hypothèses $H_1$ et $H_0$, autrement dit de décider si le signal à analyser contient ou ne contient pas un signal cyclostationnaire, ce avec un taux de mauvaise détection prédéterminé.

On peut montrer (voir annexe I) que, si l'hypothèse $H_0$ est réalisée, les estimés $\hat{R}_s^{\alpha_k}$ des coefficients de corrélation cyclique suivent une loi gaussienne centrée de variance $\dfrac{\sigma^4}{U}$. On peut montrer en outre que (voir annexe II), sous la même hypothèse, les estimés respectifs de deux coefficients de corrélation cyclique $\hat{R}_s^{\alpha_{k_1}}(m_1)$ et $\hat{R}_s^{\alpha_{k_2}}(m_2)$ sont décorrélés, c'est-à-dire sont tels que $E\left\{\hat{R}_s^{\alpha_{k_1}}(m_1)\left(\hat{R}_s^{\alpha_{k_2}}(m_2)\right)^*\middle|H_0\right\} = 0$ si $m_1 \neq m_2$. En revanche, si $m_1 = m_2$, les estimés de ces coefficients, $\hat{R}_s^{\alpha_{k_1}}(m_1)$ et $\hat{R}_s^{\alpha_{k_2}}(m_2)$, sont corrélés.

Nous envisagerons successivement le cas d'un contexte aveugle et celui d'un contexte semi-aveugle.

Dans un contexte aveugle, la fonction de discrimination proposée se réduit à :

$$\hat{J} = \sum_{m \in I_M^*} \left|\hat{R}_s^0(m)\right|^2 \tag{9}$$

car l'on ne connaît pas *a priori* les fréquences cycliques du signal cyclostationnaire que l'on recherche.

L'estimée $\hat{J}$ s'exprime comme une somme de $M$ variables gaussiennes centrées, sa densité de probabilité conditionnelle suit une loi du $\chi^2$, soit :

$$\Pr\left(\hat{J}\middle|H_0\right) = \frac{U}{\sigma^4} \frac{1}{(M-1)! 2^M} \left(\hat{J}\frac{U}{\sigma^4}\right)^{M-1} e^{-\left(\hat{J}\frac{U}{\sigma^4}\right)/2} \tag{10}$$

On en déduit que sa fonction de répartition est donnée par :

$$\Pr\left(\hat{J} \leq \hat{J}_0\middle|H_0\right) = \gamma\left(M, \hat{J}_0\frac{U}{\sigma^4}\right) \tag{11}$$

et, par conséquent,

$$\Pr\left(\hat{J} > \hat{J}_0 \middle| H_0\right) = 1 - \gamma\left(M, \hat{J}_0 \frac{U}{\sigma^4}\right) \qquad (12)$$

où $\gamma$ est la fonction gamma incomplète inférieure normalisée, c'est-à-dire :

$$\gamma(M, x) = \frac{1}{(M-1)!} \int_0^x t^{M-1} e^{-t} dt \qquad (13)$$

D'après l'expression (12), on voit que si :

$$1 - \gamma\left(M, \hat{J}_0 \frac{U}{\sigma^4}\right) \leq \eta \qquad (14)$$

où $\eta$ est un taux prédéterminé de mauvaise détection, on peut conclure que, si $\hat{J} > \hat{J}_0$, l'hypothèse $H_0$ est réalisée avec une probabilité inférieure à $\eta$. En d'autres termes, la probabilité d'absence de cyclostationnarité sachant que $\hat{J} > \hat{J}_0$ est égale à $\eta$.

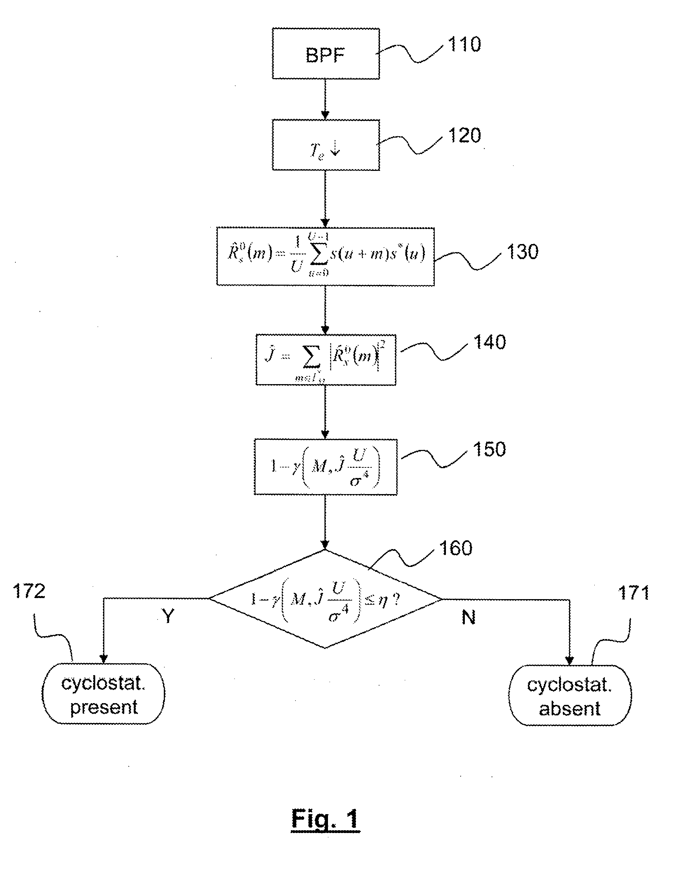

La Fig. 1 représente de manière schématique la méthode de détection d'un signal cyclostationnaire selon un premier mode de réalisation de l'invention.

A l'étape 110 le signal à analyser $s(t)$ est filtré puis démodulé en bande base, si nécessaire.

Le signal ainsi filtré est échantillonné en 120 à la fréquence de Nyquist $\dfrac{1}{T_e}$.

A l'étape 130, on estime les coefficients de coefficients cycliques du $R_s^0(m)$ grâce à l'expression (5), c'est-à-dire :

$$\hat{R}_s^0(m) = \frac{1}{U} \sum_{u=0}^{U-1} s(u+m) s^*(u) \qquad (15)$$

A l'étape 140 on estime la valeur de la fonction de discrimination selon l'expression (9). On note $\hat{J}$ cette estimée.

On calcule, en 150, la valeur de l'expression $1 - \gamma\left(M, \hat{J} \dfrac{U}{\sigma^4}\right)$ et on la compare en 160 à un taux de mauvaise (ou fausse) détection $\eta$ prédéterminé.

Si cette valeur est inférieure à $\eta$, on conclut en 172 à la présence d'un signal cyclostationnaire. Dans la négative, on conclut en 171 à l'absence de cyclostationnarité du signal à analyser.

Selon une seconde variante de réalisation, on dispose de plusieurs versions $s_q(t)$, $q = 1,..,Q$ d'un signal susceptible de contenir un même signal cyclostationnaire. Ces différentes versions peuvent être analysées conjointement pour déterminer si un signal cyclostationnaire est effectivement présent ou absent.

Les signaux à analyser peuvent être, selon le cas, les signaux reçus par les différentes antennes de réception d'un système SIMO (*Single Input Multiple Output*), les signaux reçus par une pluralité de capteurs ou encore les signaux lus d'un support d'enregistrement au moyen d'une pluralité de dispositifs de lecture.

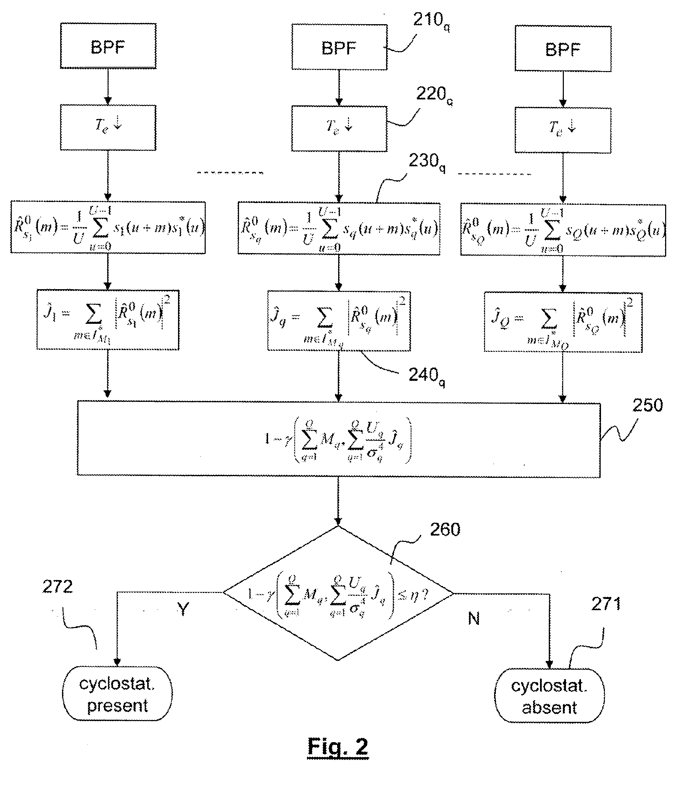

La Fig. 2 illustre de manière schématique la méthode de détection d'un signal cyclostationnaire selon un second mode de réalisation de l'invention. Ce mode de réalisation utilise une pluralité $Q$ de signaux à analyser et comprend $Q$ voies de traitement, chaque voie $q$ opérant sur un signal $s_q(t)$, et comprenant des étapes 210q à 240q identiques aux étapes 110 à 140 de la Fig. 1. Autrement dit, chaque voie permet d'obtenir une estimée $\hat{J}_q$ de la fonction de discrimination $J_q$ relative au signal $s_q(t)$. A la différence du premier mode de réalisation, on utilise une fonction de discrimination synthétique :

$$J = \sum_{q=1}^{Q} \frac{U_q}{\sigma_q^4} J_q \qquad (16)$$

où $M_q$, $U_q$ et $\sigma_q^4$ sont respectivement le nombre de décalage temporels non nuls, la largeur de la fenêtre d'autocorrélation, et le carré de la puissance de bruit relatifs au signal $s_q(t)$. La fonction de répartition conditionnelle est alors la suivante :

$$\Pr\left(\hat{J} > \hat{J}_0, q = 1,..Q \big| H_0\right) = 1 - \gamma\left(\sum_{q=1}^{Q} M_q, \hat{J}_0\right) \qquad (17)$$

Une fois les estimées $\hat{J}_q$ calculées aux étapes $240_q$, on calcule en 250, la valeur de

$$1 - \gamma\left(\sum_{q=1}^{Q} M_q, \sum_{q=1}^{Q} \frac{U_q}{\sigma_q^4} \hat{J}_q\right)$$ et on la compare en 260 à un taux de mauvaise détection $\eta$ prédéterminé.

Selon que cette valeur est inférieure ou supérieure à $\eta$, on conclut respectivement, en 272 ou en 271, à la présence ou à l'absence de cyclostationnarité dans les signaux à analyser.

Nous supposerons dans la suite que la méthode de détection est utilisée dans un contexte semi=aveugle, c'est-à-dire que les fréquences cycliques du signal cyclostationnaire que l'on recherche sont connues a *priori*. Dans ce cas, la fonction de discrimination est définie par (6) où $I_K$ est constitué par l'ensemble de ces fréquences connues.

Comme on l'a vu plus haut les estimés des coefficients de corrélation cyclique $\hat{R}_s^{\alpha_{k_1}}(m_1)$ et $\hat{R}_s^{\alpha_{k_2}}(m_2)$ sont décorrélés si $m_1 \neq m_2$ et corrélés pour $m_1 = m_2$. Dans ce dernier cas, le coefficient de corrélation de ces coefficients vaut (cf. Annexe II) :

$$E\left\{\hat{R}_s^{\alpha_{k_1}}(m_1)\left(\hat{R}_s^{\alpha_{k_2}}(m_2)\right)^* \big| H_0\right\} = \frac{\sigma^4}{U}\mu(\alpha_{k_1}, \alpha_{k2}) \qquad (18)$$

avec

$$\mu(\alpha_{k_1}, \alpha_{k2}) = e^{i\pi(\alpha_{k_1} - \alpha_{k_2})(U-1)} \frac{\sin(\pi(\alpha_{k_1} - \alpha_{k_2})U)}{\sin(\pi(\alpha_{k_1} - \alpha_{k_2}))} \qquad (18')$$

On introduit le vecteur $\hat{\mathbf{R}}$ de taille $\nu = MK$ des estimés des coefficients de corrélation cycliques :

$$\hat{\mathbf{R}} = \left(\hat{R}_s^{\alpha_1}(m_1), \hat{R}_s^{\alpha_2}(m_1), .., \hat{R}_s^{\alpha_K}(m_1), ..., \hat{R}_s^{\alpha_1}(m_M), \hat{R}_s^{\alpha_2}(m_M), .., \hat{R}_s^{\alpha_K}(m_M)\right)^T$$

où $(.)^T$ désigne l'opération de transposition. On a alors :

$$\hat{J} = \left\|\hat{\mathbf{R}}\right\|^2 \qquad\qquad (19)$$

où $\|\hat{\mathbf{R}}\|$ est la norme euclidienne de $\hat{\mathbf{R}}$.

La matrice de corrélation du vecteur $\hat{\mathbf{R}}$ sous l'hypothèse $H_0$ n'est autre que :

$$\mathbf{\Gamma} = \frac{\sigma^4}{U}\widetilde{\mathbf{A}} \qquad\qquad (20)$$

avec :

$$\widetilde{\mathbf{A}} = \begin{pmatrix} \mathbf{A} & 0 & \cdots & 0 \\ 0 & \mathbf{A} & \ddots & 0 \\ \vdots & \ddots & \ddots & 0 \\ 0 & \cdots & 0 & \mathbf{A} \end{pmatrix} \quad et$$

$$\mathbf{A} = \begin{pmatrix} 1 & \mu(\alpha_1,\alpha_2) & \cdots & \mu(\alpha_1,\alpha_K) \\ \mu(\alpha_1,\alpha_2)^* & 1 & \ddots & \mu(\alpha_2,\alpha_K) \\ \vdots & \ddots & \ddots & \vdots \\ \mu(\alpha_1,\alpha_K)^* & \mu(\alpha_2,\alpha_K)^* & \cdots & 1 \end{pmatrix} \qquad (21)$$

On remarquera que la matrice de corrélation $\Gamma$, de taille $v \times v$ est diagonale par blocs puisque les estimés de coefficients cycliques sont décorrélés pour des décalages temporels distincts.

La méthode de détection en contexte semi-aveugle utilise une fonction de discrimination modifiée dont les coefficients de corrélation cyclique sont blanchis, autrement dit décorrélés, soit :

$$\hat{J}^{whit} = \left\|\widetilde{\mathbf{A}}^{-\frac{1}{2}}\hat{\mathbf{R}}\right\|^2 \qquad\qquad (22)$$

On est ainsi ramené à une somme quadratique de variables aléatoires gaussiennes centrées. De manière similaire au cas aveugle on considère la fonction de répartition de $\hat{J}^{whit}$ :

$$\mathrm{Pr}\left(\hat{J}^{whit} \le \hat{J}_0 \middle| H_0\right) = \gamma\left(v, \hat{J}_0 \frac{U}{\sigma^4}\right) \qquad\qquad (23)$$

et par suite :

$$\Pr\left(\hat{J}^{whit} > \hat{J}_0 | H_0\right) = 1 - \gamma\left(\nu, \hat{J}_0 \frac{U}{\sigma^4}\right) \qquad (24)$$

La méthode de détection compare $1 - \gamma\left(\nu, \hat{J}_0 \frac{U}{\sigma^4}\right)$ avec un taux de mauvaise détection prédéterminé η et en déduit si l'hypothèse $H_0$ ou l'hypothèse $H_1$ est vérifiée avec un taux d'erreur maximal η.

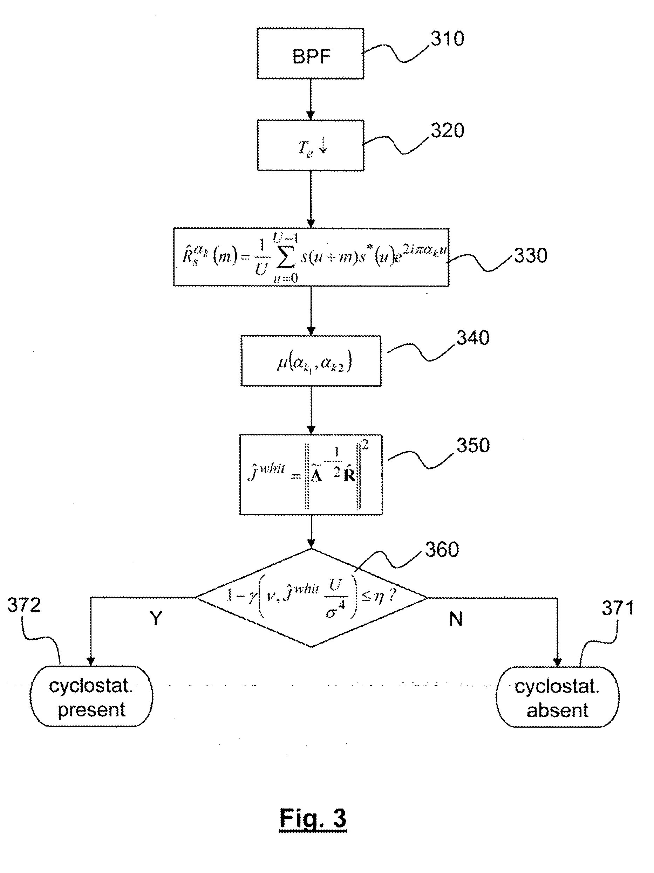

La Fig. 3 illustre de manière schématique la méthode de détection de stationnarité selon un troisième mode de réalisation de l'invention.

Après avoir été éventuellement filtré et démodulé en bande de base à l'étape 310, le signal à analyser $s(t)$ est échantillonné à une fréquence $\frac{1}{T_e}$, dépendant des caractéristiques spectrales du signal. Par exemple, si le signal est un signal étalé spectralement ou un signal OFDM, la fréquence d'échantillonnage ne sera autre que la fréquence chip $\frac{1}{T_c}$.

On estime ensuite, à l'étape 320, les coefficients de corrélation cyclique à partir de l'expression (5), ce pour un ensemble $I_K$ de fréquences cycliques connues et un ensemble de décalages temporels $I_M^*$.

On calcule ensuite, à l'étape 330, les coefficients $\mu(\alpha_{k_1}, \alpha_{k_2})$ de la matrice **A**. Etant donné que **A** est hermitienne et.que sa diagonale est constituée de 1, seuls $\frac{K(K-1)}{2}$ coefficients sont à calculer.

A l'étape 340, on calcule les coefficients de corrélation blanchis $\tilde{\mathbf{A}}^{-\frac{1}{2}}\hat{\mathbf{R}}$ et on obtient en 350 la valeur estimée de la fonction de discrimination modifiée $\hat{J}^{whit}$ au moyen de l'expression (22).

On en déduit à l'étape suivante, 360, la valeur de $1 - \gamma\left(\nu, \hat{J}^{whit} \frac{U}{\sigma^4}\right)$, valeur qui est ensuite comparée en 370 à un taux d'erreur prédéterminé η.

Selon que ladite valeur est inférieure ou supérieure à η, on conclut, en 382 à la présence ou, en 381, à l'absence d'un signal cyclostationnaire.

On remarquera d'après l'expression (18') que si la condition :

$$\max_{k_1 \neq k_2} \left|\alpha_{k_1} - \alpha_{k_2}\right| \gg \frac{1}{U} \qquad (25)$$

est vérifiée, autrement dit si la fenêtre d'autocorrélation est suffisamment large, les estimés des coefficients de corrélation cyclique sont décorrélés et la matrice de corrélation se réduit à $\mathbf{\Gamma} = \frac{\sigma^4}{U}\mathbf{I}_{\nu\times\nu}$ où $\mathbf{I}_{\nu\times\nu}$ est la matrice unité de taille $\nu\times\nu$.

Dans ce cas, les étapes de calcul 330 et 340 sont inutiles.

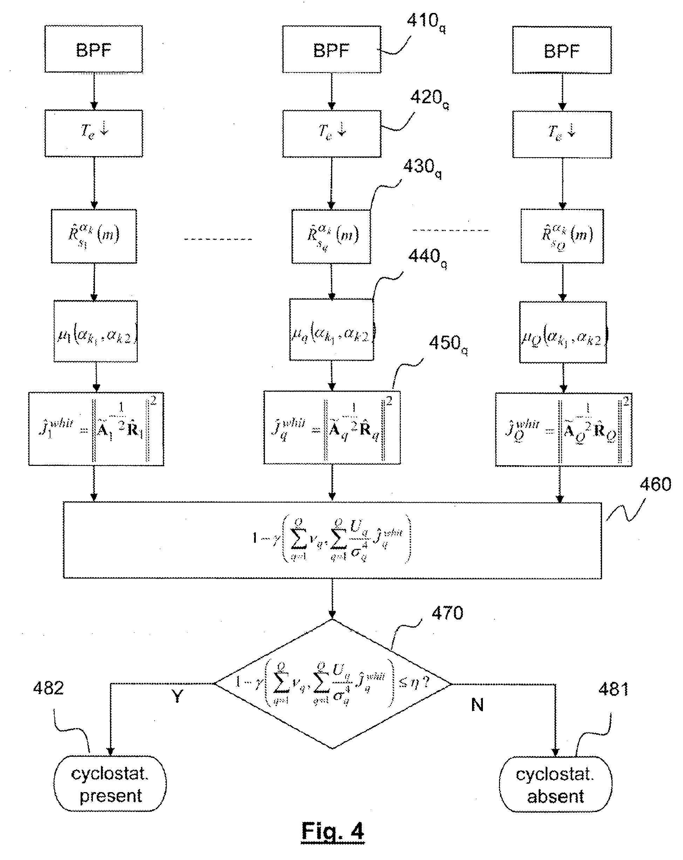

La Fig. 4 illustre de manière schématique la méthode de détection d'un signal cyclostationnaire selon un quatrième mode de réalisation de l'invention. Ce mode de réalisation utilise une pluralité $Q$ de signaux à analyser et comprend $Q$ voies de traitement. Les signaux à analyser peuvent être, comme pour le second mode de réalisation, les signaux reçus par les différentes antennes de réception d'un système SIMO (*Single Input Multiple Output*), les signaux reçus par une pluralité de capteurs ou encore les signaux lus d'un support d'enregistrement au moyen d'une pluralité de dispositifs de lecture.

Chaque voie de traitement $q$ comprend une pluralité d'étapes $410_q$ à $450_q$ identiques aux étapes 310 à 350 de la Fig. 3. En particulier, chacune des étapes $450_q$ fournit une estimée $\hat{J}_q^{whit}$ de la valeur de la fonction de discrimination pour le signal $s_q(t)$, soit $\hat{J}_q^{whit} = \left\| \tilde{\mathbf{A}}_q^{-\frac{1}{2}} \mathbf{R}_q \right\|^2$ où $\mathbf{R}_q$ est le vecteur de taille $v_q$ constitué des coefficients de corrélation cyclique $R_{s_q}^{\alpha_k}(m)$ pour les décalages temporels non nuls et les fréquences cycliques du signal $s_q(t)$, et $\tilde{\mathbf{A}}_q = \frac{U_q}{\sigma_q^4} \mathbf{\Gamma}_q$ où $\mathbf{\Gamma}_q$ est la matrice de corrélation de ces coefficients.

A la différence du troisième mode de réalisation, on calcule à l'étape 460 la valeur de :

$$1 - \gamma \left( \sum_{q=1}^{Q} v_q, \sum_{q=1}^{Q} \frac{U_q}{\sigma_q^4} \hat{J}_q^{whit} \right) \qquad (26)$$

$vq = M_q K_q$, où $M_q$ et $K_q$ sont respectivement le nombre de décalages temporels et le nombre de fréquences cycliques relatifs au signal $s_q(t)$ ; $U_q$ et $\sigma_q^4$ la largeur de la fenêtre d'autocorrélation, et le carré de la puissance de bruit relatifs à ce même signal.

La valeur de $1 - \gamma \left( \sum_{q=1}^{Q} v_q, \sum_{q=1}^{Q} \frac{U_q}{\sigma_q^4} \hat{J}_q^{whit} \right)$ est ensuite comparée en 470 à un taux de mauvaise détection prédéterminé $\eta$.

Selon que cette valeur est inférieure ou supérieure à $\eta$, on conclut comme précédemment à la présence, en 482, ou à l'absence, en 481, de cyclostationnarité dans les signaux à analyser.

La remarque précédente concernant la décorrélation des coefficients de corrélation cyclique s'applique ici également. En choisissant $U$ suffisamment grand, les matrices de corrélation (ou certaines d'entre elles seulement) se réduisent à $\mathbf{\Gamma}_q = \frac{\sigma^4}{U} \mathbf{I}_{v_q \times v_q}$ où $\mathbf{I}_{vq \times vq}$ est la matrice unité de taille $v_q \times v_q$. Les étapes de calcul $330_q$ et $340_q$ sont alors inutiles.

## ANNEXE I

Les coefficients de corrélation cyclique peuvent être estimés par :

$$\hat{R}_s^{\alpha_k}(m) = \frac{1}{U} \sum_{u=0}^{U-1} s(u+m) s^*(u) e^{2i\pi\alpha_k u} \quad .$$

On se place dans l'hypothèse $H_0$, autrement dit les $s(u)$ sont des variables aléatoires de bruit i.i.d.

D'après le théorème de la limite centrale, $\hat{R}_s^{\alpha_k}(m)$ tend en loi vers une densité de probabilité gaussienne quand $U$ tend vers l'infini. Sa moyenne $\mathcal{E}\left\{ \hat{R}_s^{\alpha_k}(m) \right\}$ tend vers $R_s^{\alpha_k}(m) = 0$ pour $m \neq 0$.

Le moment d'ordre 4 de $s(u)$ s'exprime en fonction du cumulant d'ordre 4 :

$$E\{s(u_1+m)s^*(u_1)s^*(u_2+m)s(u_2)\} = cum(s(u_1+m)s^*(u_1)s^*(u_2+m)s(u_2))$$
$$+ E\{s(u_1+m)s^*(u_1)\}E\{s^*(u_2+m)s(u_2)\} + E\{s(u_1+m)s(u_2)\}E\{s^*(u_1)s^*(u_2+m)\}$$
$$+ E\{s(u_1+m)s^*(u_2+m)\}E\{s^*(u_1)s(u_2)\}$$

Le bruit étant gaussien :

$$cum(s(u_1+m)s^*(u_1)s^*(u_2+m)s(u_2)) = 0$$

Le bruit étant circulaire, c'est-à-dire sa phase étant équirépartie sur $[0,2\pi]$, on a :

$$E\{s(u_1+m)s(u_2)\}E\{s^*(u_1)s^*(u_2+m)\} = 0$$

Par conséquent, la variance asymptotique s'exprime à partir des 2nd et 4ième termes :

$$\lim_{U\to\infty}\left(E\{|\hat{R}_s^{\alpha_k}(m)|^2\}\right) = \lim_{U\to\infty}\frac{1}{U^2}\sum_{u_1=0}^{U-1}E\{s(u_1+m)s^*(u_1)\}e^{-2i\pi\alpha_k u_1}\sum_{u_2=0}^{U-1}E\{s^*(u_2+m)s(u_2)\}e^{2i\pi\alpha_k u_2}$$
$$+ \lim_{U\to\infty}\frac{1}{U^2}\sum_{u_1=0}^{U-1}\sum_{u_2=0}^{U-1}E\{s(u_1+m)s^*(u_2+m)\}E\{s^*(u_1)s(u_2)\}e^{-2i\pi\alpha_k(u_1-u_2)}$$

Le premier terme tend vers $\left|R_s^{\alpha_k}(m)\right|^2 = 0$ quand $U$ tend vers l'infini.

Le second terme est non nul si et seulement si $u_1=u_2$ et dans ce cas, puisque $E\{|s(u)|^2\}=\sigma^2$, le second terme tend vers $\dfrac{\sigma^4}{U}$ (seuls $U$ facteurs sont non nuls sous le signe somme).

**ANNEXE II**

Nous montrerons dans cette annexe que deux coefficients de corrélation cyclique $\hat{R}_s^{\alpha_{k_1}}(m_1)$ et $\hat{R}_s^{\alpha_{k_2}}(m_2)$ sont décorrélés si $m_1 \neq m_2$. Sinon, si $m_1 = m_2$, ces deux coefficients sont corrélés.
On a :

$$\lim_{U\to\infty}\left(E\{\hat{R}_s^{\alpha_{k_1}}(m_1)(\hat{R}_s^{\alpha_{k_2}}(m_2))^*\}\right) =$$
$$\lim_{U\to\infty}\frac{1}{U^2}E\left\{\sum_{u_1=0}^{U-1}\sum_{u_2=0}^{U-1}E\{s(u_1+m)s^*(u_1)s^*(u_2+m)s(u_2)\}e^{-2i\pi(\alpha_{k_1}u_1-\alpha_{k_2}u_2)}\right\}$$

De même que dans l'annexe I, on peut exprimer ce moment d'ordre 4 en fonction du cumulant et de produits de moments d'ordre 2. Le cumulant s'annule, un terme est nul du fait de la circularité du bruit, un terme tend vers

$$\mathcal{E}\left\{R_s^{\alpha_{k_1}}(m_1)\left(R_s^{\alpha_{k_2}}(m_2)\right)^*\right\} = 0$$ . En définitive seul reste le terme :

$$\lim_{U\to\infty}\left(\mathcal{E}\left\{\hat{R}_s^{\alpha_{k_1}}(m_1)\left(\hat{R}_s^{\alpha_{k_2}}(m_2)\right)^*\right\}\right) =$$

$$\lim_{U\to\infty}\frac{1}{U^2}\mathcal{E}\left\{\sum_{u_1=0}^{U-1}\sum_{u_2=0}^{U-1}\mathcal{E}\left\{s(u_1+m_1)s^*(u_2+m_2)\right\}\mathcal{E}\left\{s^*(u_1)s(u_2)\right\}e^{-2i\pi\left(\alpha_{k_1}u_1-\alpha_{k_2}u_2\right)}\right\}$$

Etant donné que le bruit est décorrélé, $\mathcal{E}\left\{s(u_1+m_1)s^*(u_2+m_2)\right\}=0$ , si $m_1 \neq m_2$. Par conséquent, dans

ce cas $\lim_{U\to\infty}\left(\mathcal{E}\left\{\hat{R}_s^{\alpha_{k_1}}(m_1)\left(\hat{R}_s^{\alpha_{k_2}}(m_2)\right)^*\right\}\right)=0$ .

En revanche si $m_1 = m_2$, on a :

$$\lim_{U\to\infty}\left(\mathcal{E}\left\{\hat{R}_s^{\alpha_{k_1}}(m_1)\left(\hat{R}_s^{\alpha_{k_2}}(m_2)\right)^*\right\}\right) = \frac{\sigma^4}{U}\sum_{u=0}^{U-1}e^{-2i\pi\left(\alpha_{k_1}u_1-\alpha_{k_2}u_2\right)}$$

$$= \frac{\sigma^4}{U}e^{-i\pi\left(\alpha_{k_1}u_1-\alpha_{k_2}u_2\right)(U-1)}\frac{\sin\left(\pi\left(\alpha_{k_1}-\alpha_{k_2}\right)U\right)}{\sin\left(\pi\left(\alpha_{k_1}-\alpha_{k_2}\right)\right)}$$

Les coefficients $\hat{R}_s^{\alpha_{k_1}}(m_1)$ et $\hat{R}_s^{\alpha_{k_2}}(m_2)$ sont donc bien corrélés.

## Revendications

1. Méthode de détection d'un signal cyclostationnaire dans un signal à analyser, reçu d'un émetteur par un récepteur ou lu d'un support d'enregistrement par un dispositif de lecture, **caractérisée en ce que** l'on estime la valeur d'une fonction de discrimination $J$ s'exprimant comme une forme quadratique des coefficients de corrélation cyclique du signal à analyser pour un ensemble $(I_M^*)$ de décalages temporels non nuls et un ensemble $(I_K)$ de fréquences cycliques, et que l'on compare la valeur $1-\gamma\left(\nu,\frac{U}{\sigma^4}J\right)$ à un taux de mauvaise détection $\eta$ pour déterminer si

   ledit signal cyclostationnaire est présent dans le signal à analyser, où $\gamma(\nu,x)$ est la fonction gamma inférieure incomplète normalisée, $\nu$ est le produit du cardinal ( $M$ ) dudit ensemble de décalages temporels non nuls et du cardinal ( $K$ ) dudit ensemble de fréquences cycliques, $U$ est la largeur de la fenêtre d'autocorrélation sur laquelle sont calculés les coefficients de corrélation cyclique, et $\sigma^4$ est le carré de la variance du bruit.

2. Méthode de détection selon la revendication 1, **caractérisée en ce que** ledit ensemble de fréquences cycliques se réduit à la fréquence nulle et que la valeur de la fonction de discrimination est calculée par :

$$J = \sum_{m \in I_M^*} \left| R_s^0(m) \right|^2$$

où $R_s^0(m)$ est la valeur de la fonction d'autocorrélation du signal à analyser pour un décalage temporel non nul $m \in I_M^*$, et $I_M^*$ étant ledit ensemble de décalages temporels non nuls.

3. Méthode de détection selon la revendication 2, **caractérisée en ce que** ladite valeur de la fonction d'autocorrélation est estimée à partir des échantillons $s(u)$ du signal à analyser par :

$$\hat{R}_s^0(m) = \frac{1}{U} \sum_{u=0}^{U-1} s(u+m)s^*(u)$$

où $U$ est la largeur de la fenêtre d'autocorrélation et $m$ est un décalage temporel exprimé en nombre de périodes d'échantillonnage.

4. Méthode de détection selon la revendication 1, **caractérisée en ce que** la fonction de discrimination est calculée par :

$$J = \left\| \tilde{\mathbf{A}}^{-\frac{1}{2}} \mathbf{R} \right\|^2$$

où $\mathbf{R}$ est le vecteur de taille $\nu$ constitué des coefficients de corrélation cyclique $R_s^{\alpha_k}(m)$ pour lesdits décalages temporels non nuls et lesdites fréquences cycliques, et $\tilde{\mathbf{A}}$ est une matrice proportionnelle à la matrice de corrélation de ces coefficients.

5. Méthode de détection selon la revendication 1, **caractérisée en ce que** la fonction de discrimination est calculée par :

$$J = \sum_{m \in I_M^*} \sum_{\alpha_k \in I_K} \left| R_s^{\alpha_k}(m) \right|^2$$

où $R_s^{\alpha_k}(m)$, sont les coefficients de corrélation cyclique, $I_M^*$ est ledit ensemble de décalages temporels non nuls et $I_K$ est ledit ensemble de fréquences cycliques.

6. Méthode de détection selon la revendication 4 ou 5, **caractérisée en ce que** les coefficients de corrélation cyclique sont estimés à partir des échantillons $s(u)$ du signal à analyser par :

$$\hat{R}_s^{\alpha_k}(m) = \frac{1}{U} \sum_{u=0}^{U-1} s(u+m)s^*(u)e^{2i\pi\alpha_k u}$$

où $\alpha_k$ est une fréquence cyclique appartenant à $I_K$ est $m$ est un décalage temporel, exprimé en nombre de périodes d'échantillonnage.

7. Méthode de détection d'un signal cyclostationnaire dans une pluralité $Q$ de signaux à analyser ($s_q(t)$), reçus d'un émetteur par une pluralité de récepteurs ou lus d'un support d'enregistrement par une pluralité de dispositifs de lecture, **caractérisée en ce que** pour chacun desdits signaux à analyser, on estime la valeur d'une fonction de discrimination $J_q$ s'exprimant comme une forme quadratique des coefficients de corrélation cyclique de ce signal pour un ensemble $(I_{M_q}^*)$ de décalages temporels non nuls et un ensemble $(I_{K_q})$ de fréquences cycliques, et que l'on compare la valeur $1 - \gamma\left( \sum\limits_{q=1}^{Q} \nu_q, \sum\limits_{q=1}^{Q} \dfrac{U_q}{\sigma_q^4} J_q \right)$ à un taux de mauvaise détection $\eta$ pour déterminer si ledit signal cyclostationnaire est présent dans lesdits signaux à analyser, où $\gamma(\nu, x)$ est la fonction gamma inférieure incomplète normalisée, $\nu_q$ est le produit du cardinal ($M_q$) dudit ensemble de décalages temporels non nuls et du cardinal ($K_q$) dudit ensemble de fréquences cycliques pour le signal à analyser $s_q(t)$, $U_q$ est la largeur de la fenêtre d'autocorrélation sur laquelle sont calculés les coefficients de corrélation cyclique et $\sigma_q^4$ est le carré de la variance du bruit, relatifs au signal à analyser.

8. Méthode de détection selon la revendication 7, **caractérisée en ce que**, pour chacun desdits signaux à analyser, ledit ensemble de fréquences cycliques se réduit à la fréquence nulle et que la valeur de la fonction de discrimination est calculée, pour ce signal, par :

$$J_q = \sum_{m \in I_{M_q}^*} \left| R_{s_q}^0(m) \right|^2$$

où $R_{s_q}^0(m)$ est la valeur de la fonction d'autocorrélation du signal à analyser $s_q(t)$, pour un décalage temporel

non nul $m \in I_{M_q}^*$, $I_{M_q}^*$ étant ledit ensemble de décalages temporels non nuls pour ce signal.

9. Méthode de détection selon la revendication 8, **caractérisée en ce que**, pour chacun desdits signaux à analyser, ladite valeur de la fonction d'autocorrélation est estimée à partir des échantillons $s(u)$ de ce signal par :

$$\hat{R}_{s_q}^0(m) = \frac{1}{U} \sum_{u=0}^{U-1} s_q(u+m) s_q^*(u)$$

où $U$ est la largeur de la fenêtre d'autocorrélation et $m$ est un décalage temporel exprimé en nombre de périodes d'échantillonnage.

10. Méthode de détection selon la revendication 7, **caractérisée en ce que**, pour chaque signal $s_q(t)$ à analyser, la fonction de discrimination est calculée par :

$$J_q = \left\| \tilde{\mathbf{A}}_q^{-\frac{1}{2}} \mathbf{R}_q \right\|^2$$

où $\mathbf{R}_q$ est le vecteur de taille $\nu_q$ constitué des coefficients de corrélation cyclique $R_{s_q}^{\alpha_k}(m)$ pour lesdits décalages

temporels non nuls et lesdites fréquences cycliques, et $\tilde{\mathbf{A}}_q$ est une matrice proportionnelle à la matrice de corrélation de ces coefficients.

**11.** Méthode de détection selon la revendication 7, **caractérisée en ce que**, pour chaque signal $s_q(t)$ à analyser, la fonction de discrimination est calculée par :

$$J_q = \sum_{m \in I^{*}_{M_q}} \sum_{\alpha_k \in I_{K_q}} \left| R^{\alpha_k}_{s_q}(m) \right|^2$$

où $R^{\alpha_k}_{s_q}(m)$, $m \in I^{*}_{M_q}$ sont les coefficients de corrélation cyclique du signal $s_q(t)$, $I^{*}_{M_q}$ est ledit ensemble de décalages temporels non nuls et $I_{K_q}$ est ledit ensemble de fréquences cycliques relatifs à ce signal.

**12.** Méthode de détection selon la revendication 10 ou 11, **caractérisée en ce que**, pour chaque signal $s_q(t)$ à analyser, les coefficients de corrélation cyclique sont estimés à partir des échantillons $s_q(u)$ de ce signal par :

$$\hat{R}^{\alpha_k}_s(m) = \frac{1}{U} \sum_{u=0}^{U-1} s(u+m) s^*(u) e^{2i\pi\alpha_k u}$$

où $\alpha_k$ est une fréquence cyclique appartenant à $I_K$ et $m$ est un décalage temporel, exprimé en nombre de périodes d'échantillonnage.

**Patentansprüche**

**1.** Verfahren zur Erfassung eines zyklostationären Signals in einem zu analysierenden Signal, das durch einen Empfänger von einem Sender empfangen wird oder das durch eine Lesevorrichtung von einem Speicherträger gelesen wird, **dadurch gekennzeichnet, dass** man den Wert einer Diskriminationsfunktion J abschätzt, die sich als eine quadratische Form der zyklischen Korrelationskoeffizienten des zu analysierenden Signals ausdrückt, und zwar für eine Gruppe $\left( I^{*}_M \right)$ von Zeitverschiebungen ungleich null und eine Gruppe ($I_k$) von zyklischen Frequenzen, und dass man den Wert $1 - \gamma\left( v, \frac{U}{\sigma^4} J \right)$ mit einer Schlechterfassungsrate $\eta$ vergleicht, um zu bestimmen, ob das zyklostationäre Signal in dem zu analysierenden Signal vorhanden ist, wobei $\gamma(v,x)$ die normalisierte unvollständige untere Gammafunktion ist, $v$ das Produkt aus der Kardinalzahl (M) der Gruppe von Zeitverschiebung ungleich null und der Kardinalzahl (K) der Gruppe von zyklischen Frequenzen ist, U die Breite des Autokorrelationsfensters ist, auf dem die zyklischen Korrelationskoeffizienten berechnet werden, und $\sigma^4$ das Quadrat der Varianz des Rauschens ist.

**2.** Verfahren zur Erfassung nach Anspruch 1, **dadurch gekennzeichnet, dass** die Gruppe von zyklischen Frequenzen sich auf die Frequenz null reduziert, und dass der Wert der Diskriminationsfunktion berechnet wird durch:

$$J = \sum_{m \in I^{*}_M} |R^0_S(m)|^2$$

wobei $R^0_S(m)$ der Wert der Autokorrelationsfunktion des zu analysierenden Signals für eine Zeitverschiebung

ungleich null $m \in I_M^*$, und $I_M^*$ die Gruppe von Zeitverschiebungen ungleich null ist.

3.  Verfahren zur Erfassung nach Anspruch 2, **dadurch gekennzeichnet, dass** der Wert der Autokorrelationsfunktion abgeschätzt wird ausgehend von Abtastproben $s(u)$ des zu analysierenden Signals durch:

$$\hat{R}_s^0(m) = \frac{1}{U} \sum_{u=0}^{U-1} s(u+m)s^*(u)$$

wobei $U$ die Breite des Autokorrelationsfensters ist, und $m$ eine Zeitverschiebung ist, ausgedrückt als Zahl von Abtastperioden.

4.  Verfahren zur Erfassung nach Anspruch 1, **dadurch gekennzeichnet, dass** die Diskriminationsfunktion berechnet wird durch:

$$J = \left\| \tilde{A}^{-\frac{1}{2}} R \right\|^2$$

wobei $R$ der Vektor der Länge $\nu$ ist, gebildet durch die zyklischen Korrelationskoeffizienten $R_s^{\alpha_k}(m)$ für die Zeitverschiebungen ungleich null und die zyklischen Frequenzen, und wobei $\tilde{A}$ eine Matrix proportional zur Korrelationsmatrix dieser Koeffizienten ist.

5.  Verfahren zur Erfassung nach Anspruch 1, **dadurch gekennzeichnet, dass** die Diskriminationsfunktion berechnet wird durch:

$$J = \sum_{m \in I_M^*} \sum_{\alpha_k \in I_K} \left| R_s^{\alpha_k}(m) \right|^2$$

wobei die $R_s^{\alpha_k}(m)$, $m \in I_M^*$ die zyklischen Korrelationskoeffizienten sind, $I_M^*$ die Gruppe von Zeitverschiebungen ungleich null ist, und $I_K$ die Gruppe von zyklischen Frequenzen ist.

6.  Verfahren zur Erfassung nach Anspruch 4 oder 5, **dadurch gekennzeichnet, dass** die zyklischen Korrelationskoeffizienten abgeschätzt werden ausgehend von den Abtastproben $s(u)$ des zu analysierenden Signals durch:

$$\hat{R}_s^{\alpha_k}(m) = \frac{1}{U} \sum_{u=0}^{U-1} s(u+m)s^*(u)e^{2i\pi\alpha_k u}$$

wobei $\alpha_k$ eine zu $I_K$ gehörende zyklische Frequenz ist, und wobei $m$ eine Zeitverschiebung ist, ausgedrückt als Zahl von Abtastperioden.

7.  Verfahren zur Erfassung eines zyklostationären Signals in einer Mehrzahl $Q$ von zu analysierenden Signalen ($s_q(t)$), die durch eine Mehrzahl von Empfängern von einem Sender empfangen werden oder durch eine Mehrzahl von Lesevorrichtungen von einem Speicherträger gelesen werden, **dadurch gekennzeichnet, dass** man für jedes der zu analysierenden Signale den Wert einer Diskriminationsfunktion $J_q$ abschätzt, die sich als eine quadratische Form der zyklischen Korrelationskoeffizienten dieses Signals ausdrückt, und zwar für eine Gruppe $\left(I^*_{M_q}\right)$ von Zeitverschiebungen ungleich null und für eine Gruppe $(I_{K_q})$ von zyklischen Frequenzen, und dass man den Wert $1 - \gamma \left( \sum_{q=1}^{Q} v_q, \sum_{q=1}^{Q} \frac{U_q}{\sigma_q^4} J_q \right)$ mit einer Schlechterfassungsrate $\eta$ vergleicht, um zu bestimmen, ob das zyklostationäre Signal in den zu analysierenden Signalen vorhanden ist, wobei $\gamma(v,x)$ die normalisierte unvollständige untere Gammafunktion ist, $v_q$ das Produkt der Kardinalzahl $(M_q)$ der Gruppe von Zeitverschiebungen ungleich null und der Kardinalzahl $(K_q)$ der Gruppe von zyklischen Frequenzen für das zu analysierende Signal $s_q(t)$ ist, wobei $U_q$ die Breite des Autokorrelationsfensters ist, auf dem die zyklischen Korrelationskoeffizienten berechnet werden, und wobei $\sigma_q^4$ das Quadrat der Varianz des Rauschens ist, bezogen auf das zu analysierende Signal.

8.  Verfahren zur Erfassung nach Anspruch 7, **dadurch gekennzeichnet, dass** für jedes der zu analysierenden Signale die Gruppe von zyklischen Frequenzen sich auf die Frequenz null reduziert, und dass der Wert der Diskriminationsfunktion für dieses Signal berechnet wird durch:

$$J_q = \sum_{m \in I^*_{M_q}} \left| R^0_{s_q}(m) \right|^2$$

wobei $R^0_{s_q}(m)$ der Wert der Autokorrelationsfunktion des zu analysierenden Signals $s_q(t)$ für eine Zeitverschiebung ungleich null $m \in I^*_{M_q}$ ist, wobei $I^*_{M_q}$ die Gruppe von Zeitverschiebungen ungleich null für dieses Signal ist.

9.  Verfahren zur Erfassung nach Anspruch 8, **dadurch gekennzeichnet, dass** für jedes der zu analysierenden Signale der Wert der Autokorrelationsfunktion abgeschätzt wird ausgehend von Abtastproben $s(u)$ dieses Signals durch:

$$\hat{R}^0_{s_q}(m) = \frac{1}{U} \sum_{u=0}^{U-1} s_q(u+m) s_q^*(u)$$

wobei $U$ die Breite des Autokorrelationsfensters ist, und wobei $m$ eine Zeitverschiebung ist, ausgedrückt als eine Zahl von Abtastperioden.

10. Verfahren zur Erfassung nach Anspruch 7, **dadurch gekennzeichnet, dass** für jedes zu analysierende Signal $s_q(t)$ die Diskriminationsfunktion berechnet wird durch:

$$J_q = \left\| \tilde{A}_q^{-\frac{1}{2}} R_q \right\|^2$$

wobei $\boldsymbol{R_q}$ der Vektor der Länge $v$ ist, gebildet durch die zyklischen Korrelationskoeffizienten $R^{\alpha_k}_{s_q}(m)$ für die Zeitverschiebungen ungleich null und die zyklischen Frequenzen, und wobei $\tilde{\mathbf{A}}_{\mathbf{q}}$ eine Matrix proportional zur Korrelationsmatrix dieser Koeffizienten ist.

11. Verfahren zur Erfassung nach Anspruch 7, **dadurch gekennzeichnet, dass** für jedes zu analysierende Signal $s_q(t)$ die Diskriminationsfunktion berechnet wird durch:

$$J_q = \sum_{m \in I_{M_q}^*} \sum_{\alpha_k \in I_{K_q}} \left| R_{s_q}^{\alpha_k}(m) \right|^2$$

wobei $R_{s_q}^{\alpha_k}(m)$, $m \in I_{M_q}^*$ die zyklischen Korrelationskoeffizienten des Signals $s_q(t)$ sind, wobei $I_{M_q}^*$ die Gruppe von Zeitverschiebungen ungleich null ist, und wobei $I_{K_q}$ *die* Gruppe von zyklischen Frequenzen bezogen auf dieses Signal ist.

12. Verfahren zur Erfassung nach Anspruch 10 oder 11, **dadurch gekennzeichnet, dass** für jedes zu analysierende Signal $s_q(t)$ die zyklischen Korrelationskoeffizienten abgeschätzt werden ausgehend von den Abtastproben $s_q(u)$ dieses Signals durch:

$$\hat{R}_s^{\alpha_k}(m) = \frac{1}{U} \sum_{u=0}^{U-1} s(u+m)s^*(u)e^{2i\pi\alpha_k u}$$

wobei $\alpha_k$ eine zu $I_k$ gehörende zyklische Frequenz ist, und wobei m eine Zeitverschiebung ist, ausgedrückt als Zahl von Abtastperioden.

**Claims**

1. A method for detecting a cyclostationary signal in a signal to be analyzed, received from a transmitter by a receiver or read from a recording medium by a reading device, **characterized in that** the value of a discrimination function $J$ is estimated, expressed as a quadratic form of the cyclic correlation coefficients of the signal to be analyzed for a set ( $I_M^*$ ) of non-zero time shifts and a set (*$I_K$*) of cyclic frequencies, and that the value $1 - \gamma\left(v, \dfrac{U}{\sigma^4}J\right)$ is compared with a wrong detection rate $\eta$ in order to determine if said cyclostationary signal is present in the signal to be analyzed, wherein $\gamma(v,x)$ is the normalized lower incomplete gamma function, $v$ is the product of the cardinal (*M*) of said set of non-zero time shifts and of the cardinal (*K*) of said set of cyclic frequencies, $U$ is the width of the autocorrelation window on which the cyclic correlation coefficients are calculated, and $\sigma^4$ is the square of the noise variance.

2. The detection method according to claim 1, **characterized in that** said set of cyclic frequencies is reduced to the zero frequency and that the value of the discrimination function is calculated by:

$$J = \sum_{m \in I_M^*} \left| R_s^0(m) \right|^2$$

wherein $R_s^0(m)$ is the value of the autocorrelation function of the signal to be analyzed for a non-zero time shift $m \in I_M^*$ , and $I_M^*$ being said set of non-zero time shifts.

3. The detection method according to claim 2, **characterized in that** said value of the autocorrelation function is estimated from the samples $s(u)$ of the signal to be analyzed by:

$$\hat{R}_s^0(m) = \frac{1}{U}\sum_{u=0}^{U-1} s(u+m)s^*(u)$$

wherein $U$ is the width of the autocorrelation window and $m$ is a time shift expressed as a number of sampling periods.

4. The detection method according to claim 1, **characterized in that** the discrimination function is calculated by:

$$J = \left\| \tilde{\mathbf{A}}^{-\frac{1}{2}}\mathbf{R} \right\|^2$$

wherein $\mathbf{R}$ is the vector of size $\nu$ consisting of the cyclic correlation coefficients $R_s^{\alpha_k}(m)$ for said non-zero time shifts and said cyclic frequencies, and $\tilde{\mathbf{A}}$ is a matrix proportional to the correlation matrix of these coefficients.

5. The detection method according to claim 1, **characterized in that** the discrimination function is calculated by:

$$J = \sum_{m \in I_M^*} \sum_{\alpha_k \in I_K} \left| R_s^{\alpha_k}(m) \right|^2$$

wherein $R_s^{\alpha_k}(m)$, $m \in I_M^*$ are the cyclic correlation coefficients, $I_M^*$ is said set of non-zero time shifts and $I_K$ is said set of cyclic frequencies.

6. The detection method according to claim 4 or 5, **characterized in that** the cyclic correlation coefficients are estimated from the samples $s(u)$ of the signal to be analyzed by:

$$\hat{R}_s^{\alpha_k}(m) = \frac{1}{U}\sum_{u=0}^{U-1} s(u+m)s^*(u)e^{2i\pi\alpha_k u}$$

wherein $\alpha_k$ is a cyclic frequency belonging to $I_K$ and $m$ is a time shift, expressed as a number of sampling periods.

7. The detection method of a cyclostationary signal in a plurality $Q$ of signals to be analyzed ($s_q(t)$), received from a transmitter by a plurality of receivers or read from a recording medium by a plurality of reader devices, **characterized in that** for each of said signals to be analyzed, the value of a discrimination function $J_q$ is estimated, expressed as a quadratic form of the cyclic correlation coefficients of this signal for a set ( $I_{M_q}^*$ ) of non-zero time shifts and a set ($I_{K_q}$) of cyclic frequencies, and the value $1 - \gamma\left( \sum_{q=1}^{Q} v_q, \sum_{q=1}^{Q} \frac{U_q}{\sigma_q^4} J_q \right)$ is compared with a wrong detection rate $\eta$ in order to determine whether said cyclostationary signal is present in said signals to be analyzed, wherein $\gamma(\nu,x)$ is the normalized lower incomplete gamma function, $v_q$ is the product of the cardinal ( $M_q$ ) of said set of non-zero time shifts and of the cardinal ( $K_q$ ) of said set of cyclic frequencies for the signal to be analyzed $s_q(t)$, $U_q$ is the width of the autocorrelation window on which the cyclic correlation coefficients are calculated and $\sigma_q^4$ is the square of the noise variance, relative to the signal to be analyzed.

8. The detection method according to claim 7, **characterized in that** for each of said signals to be analyzed, said set of cyclic frequencies is reduced to the zero frequency and the value of the discrimination function is calculated for this signal by:

$$J_q = \sum_{m \in I_{M_q}^*} \left| R_{s_q}^0 (m) \right|^2$$

wherein $R_{s_q}^0 (m)$ is the value of the autocorrelation function of the signal to be analyzed $s_q(t)$, for a non-zero time shift $m \in I_{M_q}^*$, $I_{M_q}^*$ being said set of non-zero time shifts for this signal.

9. The detection method according to claim 8, **characterized in that** for each of said signals to be analyzed, said value of the autocorrelation function is estimated from the samples $s(u)$ of this signal by:

$$\hat{R}_{s_q}^0 (m) = \frac{1}{U} \sum_{u=0}^{U-1} s_q(u + m) s_q^*(u)$$

wherein $U$ is the width of the autocorrelation window and $m$ is a time shift expressed as a number of sampling periods.

10. The detection method according to claim 7, **characterized in that** for each signal $s_q(t)$ to be analyzed, the discrimination function is calculated by:

$$J_q = \left\| \tilde{\mathbf{A}}_q^{-\frac{1}{2}} \mathbf{R}_q \right\|^2$$

wherein $\mathbf{R}_q$ is the vector of size $v_q$ consisting of the cyclic correlation coefficients $R_{s_q}^{\alpha_k}(m)$ for said non-zero time shifts and said cyclic frequencies, and $\tilde{\mathbf{A}}_q$ is a matrix proportional to the correlation matrix of these coefficients.

11. The detection method according to claim 7, **characterized in that**, for each signal $s_q(t)$ to be analyzed, the discrimination function is calculated by:

$$J_q = \sum_{m \in I_{M_q}^*} \sum_{\alpha_k \in I_{K_q}} \left| R_{s_q}^{\alpha_k}(m) \right|^2$$

wherein $R_{s_q}^{\alpha_k}(m)$, $m \in I_{M_q}^*$ are the cyclic correlation coefficients of the signal $s_q(t)$, $s_q(t)$, $I_{M_q}^*$ is said set of non-zero time shifts and $I_{K_q}$ is said set of cyclic frequencies relative to this signal.

12. The detection method according to claim 10 or 11, **characterized in that**, for each signal $s_q(t)$ to be analyzed, the cyclic correlation coefficients are estimated from the samples $s_q(u)$ of this signal by:

$$\hat{R}_s^{\alpha_k}(m) = \frac{1}{U}\sum_{u=0}^{U-1} s(u+m)s^*(u)e^{2i\pi\alpha_k u}$$

wherein $\alpha_k$ is a cyclic frequency belonging to $I_K$ and $m$ is a time shift, expressed as a number of sampling periods.

$$BPF \qquad \sim 110$$

$$T_e \downarrow \qquad \sim 120$$

$$\hat{R}_s^0(m) = \frac{1}{U} \sum_{u=0}^{U-1} s(u+m)s^*(u) \qquad \sim 130$$

$$\hat{J} = \sum_{m \in I_0} \left| \hat{R}_s^0(m) \right|^2 \qquad \sim 140$$

$$1 - \gamma\left(M, \hat{J}\frac{U}{\sigma^4}\right) \qquad \sim 150$$

$$\sim 160$$

172

Y

$$1 - \gamma\left(M, \hat{J}\frac{U}{\sigma^4}\right) \leq \eta \, ?$$

N

171

cyclostat. present

cyclostat. absent

## Fig. 1

$$\hat{R}_{s_1}^0(m) = \frac{1}{U}\sum_{u=0}^{U-1} s_1(u+m)s_1^*(u)$$

$$\hat{R}_{s_q}^0(m) = \frac{1}{U}\sum_{u=0}^{U-1} s_q(u+m)s_q^*(u)$$

$$\hat{R}_{s_Q}^0(m) = \frac{1}{U}\sum_{u=0}^{U-1} s_Q(u+m)s_Q^*(u)$$

$$\hat{J}_1 = \sum_{m\in I_{M_1}^*} \left|\hat{R}_{s_1}^0(m)\right|^2$$

$$\hat{J}_q = \sum_{m\in I_{M_q}^*} \left|\hat{R}_{s_q}^0(m)\right|^2$$

$$\hat{J}_Q = \sum_{m\in I_{M_Q}^*} \left|\hat{R}_{s_Q}^0(m)\right|^2$$

$$1 - \gamma\left(\sum_{q=1}^{Q} M_q, \sum_{q=1}^{Q} \frac{U_q}{\sigma_q^4}\hat{J}_q\right)$$

$$1 - \gamma\left(\sum_{q=1}^{Q} M_q, \sum_{q=1}^{Q} \frac{U_q}{\sigma_q^4}\hat{J}_q\right) \leq \eta\ ?$$

cyclostat. present

cyclostat. absent

**Fig. 2**

BPF ⟶ 310

$T_e \downarrow$ ⟶ 320

$$\hat{R}_s^{\alpha_k}(m) = \frac{1}{U} \sum_{u=0}^{U-1} s(u+m)s^*(u)e^{2i\pi\alpha_k u}$$ ⟶ 330

$\mu(\alpha_{k_1}, \alpha_{k2})$ ⟶ 340

$$\hat{j}^{whit} = \left\| \tilde{\mathbf{A}}^{-\frac{1}{2}} \hat{\mathbf{R}} \right\|^2$$ ⟶ 350

360

$$1 - \gamma\left(v, \hat{j}^{whit} \frac{U}{\sigma^4}\right) \leq \eta \,?$$

372    Y      N    371

cyclostat. present

cyclostat. absent

**Fig. 3**

$410_q$

$420_q$

$430_q$

$440_q$

$450_q$

BPF · BPF · BPF

$T_e \downarrow$ · $T_e \downarrow$ · $T_e \downarrow$

$\hat{R}^{\alpha_k}_{s_1}(m)$ · $\hat{R}^{\alpha_k}_{s_q}(m)$ · $\hat{R}^{\alpha_k}_{s_Q}(m)$

$\mu_1(\alpha_{k_1}, \alpha_{k2})$ · $\mu_q(\alpha_{k_1}, \alpha_{k2})$ · $\mu_Q(\alpha_{k_1}, \alpha_{k2})$

$\hat{J}^{whit}_1 = \left\| \tilde{A}^{-\frac{1}{2}}_1 \hat{R}_1 \right\|^2$ · $\hat{J}^{whit}_q = \left\| \tilde{A}^{-\frac{1}{2}}_q \hat{R}_q \right\|^2$ · $\hat{J}^{whit}_Q = \left\| \tilde{A}^{-\frac{1}{2}}_Q \hat{R}_Q \right\|^2$

460

$$1 - \gamma \left( \sum_{q=1}^{Q} \nu_q, \sum_{q=1}^{Q} \frac{U_q}{\sigma_q^4} \hat{J}^{whit}_q \right)$$

470

482

Y $\quad$ $1 - \gamma \left( \sum_{q=1}^{Q} \nu_q, \sum_{q=1}^{Q} \frac{U_q}{\sigma_q^4} \hat{J}^{whit}_q \right) \leq \eta ?$ $\quad$ N

481

cyclostat. present

cyclostat. absent

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. MITOLA.** Cognitive radio : an integrated agent architecture for software defined radio. *Royal Institute of Technology,* 08 Mai 2000
- **M. ÖNER et al.** << Air interface recognition for a software radio system exploiting cyclostationarity>>. *Proc. of 15th IEEE International Symposium on Personal, Indoor and Mobile Radio Communications,* Septembre 2004, 1947-1951
- <<Cyclostationarity based air interface recognition for software radiosystems>>. *Radio and Wireless Conference,* Septembre 2004, 263-266
- **L. DE C.T. GOMES et al.** Tatouage audio exploitant des propriétés de cyclostationnarité. *Traitement du Signal,* 2001, vol. 19 (1), 1-9